# EUROPÄISCHE PATENTANMELDUNG

(11) **EP 2 444 148 A1**
(43) Veröffentlichungstag der Anmeldung: **25.04.2012**
(21) Anmeldenummer: 10188779.2
(22) Anmeldetag: 25.10.2010
(51) Int. Cl.: B01J 13/00, B22F 9/24

(54) **Metallpartikelsol mit dotierten Silbernanopartikeln**

(71) Anmelder: Bayer Material Science AG, 51368 Leverkusen (DE)
(72) Erfinder: Eiden, Stefanie, 51371, Leverkusen (DE); Dr. Schädlich, Karoline, 04103, Leipzig (DE)

(57) **Zusammenfassung**

Die Erfindung betrifft ein Metallpartikelsol, welches Silbernanopartikel aufweist, die mit einem Metall bzw. einer Metallverbindung ausgewählt aus der Gruppe der Metalle Ruthenium, Rhodium, Palladium, Osmium, Iridium und Platin, bevorzugt Ruthenium dotiert sind, sowie ein Verfahren zur Herstellung eines solchen Sol und dessen Verwendung.

## Beschreibung

Die Erfindung betrifft ein Metallpartikelsol, welches Silbernanopartikel aufweist, die mit einem Metall bzw. einer Metallverbindung ausgewählt aus der Gruppe der Metalle Ruthenium, Rhodium, Palladium, Osmium, Iridium und Platin, bevorzugt Ruthenium dotiert sind, sowie ein Verfahren zur Herstellung eines solchen Sol und dessen Verwendung.

Metallpartikelsole enthaltend Silbernanopartikel werden unter anderem zur Herstellung von leitfähigen Beschichtungen bzw. zur Herstellung von Tinten für Inkjet- und Siebdruckverfahren zwecks Herstellung von leitfähigen, strukturierten Beschichtungen, beispielsweise im Form von Mikrostrukturen, mittels Druckverfahren eingesetzt. Dabei steht vielfach die Beschichtung flexibler Kunststoffsubstrate im Vordergrund, wie z.B. zur Herstellung flexibler RFID-Tags. Zur Erzielung einer ausreichenden Leitfähigkeit müssen die mittels der Silbernanopartikelsole aufgebrachten Beschichtungen für eine ausreichende Zeit bei erhöhten Temperaturen getrocknet und gesintert werden, was für die Kunststoffsubstrate eine erhebliche thermische Belastung darstellt.

Es existiert daher das Bestreben, die Sinterzeiten und/oder die Sintertemperaturen, die für die Erzielung ausreichender Leitfähigkeiten erforderlich sind, durch geeignete Maßnahmen derart herabzusetzen, dass eine solche thermische Belastung der Kunststoffsubstrate verringert werden kann.

In WO 2007/118669 A1 wird die Herstellung von Metallpartikelsolen beschrieben, worin die zur Herstellung eingesetzte die Metallsalzlösung Ionen umfasst, die ausgewählt sind aus der Gruppe umfassend Eisen, Ruthenium, Osmium, Kobalt, Rhodium, Iridium, Nickel, Palladium, Platin, Kupfer, Silber, Gold, Zink und/oder Cadmium. WO 2007/118669 A1 beschreibt jedoch keinerlei Maßnahmen zur Verringerung der Sinterzeit oder Sintertemperatur.

In US 4,778,549 ist beschrieben, dass die Zersetzung organischer Materialien aus Glas- oder Keramikkörpem beim Erhitzen auf Temperaturen von mehr als 750°C durch die Anwesenheit von katalytisch wirkenden Metallen ausgewählt aus der Gruppe Ruthenium, Rhodium, Palladium, Osmium, Iridium und Platin beschleunigt werden kann. Aus J.Am. Chem.Soc. 1989, 111, 1185-1193 ist bekannt, dass die Zersetzung von polymeren Ethern auf der metallischen Oberfläche von Ru(001) katalysiert werden kann. Keines dieser Dokumente gibt jedoch einen Anhaltspunkt dafür, wie die für die Erzielung ausreichender Leitfähigkeiten erforderlichen Sinterzeiten und/oder die Sintertemperaturen von Beschichtungen aus Silbernanopartikeln herabgesetzt werden können, um die thermischen Belastung von Kunststoffsubstraten zu reduzieren.

Es bestand demnach weiterhin Bedarf an einer einfachen Möglichkeit, zur Verringerung der thermischen Belastung von Kunststoffsubstraten die Sinterzeiten und/oder die Sintertemperaturen von Beschichtungen enthaltend Silbernanopartikel zu reduzieren und gleichzeitig eine für die Anwendung ausreichende Leitfähigkeit zu erzielen.

Die Aufgabe der vorliegenden Erfindung bestand demnach darin, ein Metallpartikelsol enthaltend Silbernanopartikel sowie ein Verfahren zu dessen Herstellung aufzufinden, mit dem die für die Erzielung ausreichender Leitfähigkeiten erforderlichen Sinterzeiten und/oder die Sintertemperaturen derart herabgesetzt werden können, dass eine thermische Belastung insbesondere von Kunststoffsubstraten verringert werden kann.

Überraschend wurde gefunden, dass eine Dotierung der Silbernanopartikel mit einem Gehalt von 0,1 bis 10 Gew.-% eines Metalls ausgewählt aus der Gruppe Ruthenium, Rhodium, Palladium, Osmium, Iridium und Platin, bezogen auf den Silbergehalt des Metallpartikelsols, in Form des Metalls oder wenigstens einer Verbindung eines solchen Metalls die Sinterzeit, die zur Erzielung einer ausreichenden Leitfähigkeit erforderlich ist, deutlich verringert. Dabei können die Sinterzeiten bis zu 80% verringert werden, was zu einer erheblichen thermischen Entlastung insbesondere von thermisch empfindlichen Kunststoffsubstraten führt und zudem die verfügbare Palette möglicher Kunststoffsubstrate für die Beschichtung mit solchen leitfähigen Strukturen erweitern kann. Alternativ können durch vergleichbare Sinterzeiten, mit den erfindungsgemäßen Metallpartikelsolen deutlich höhere Leitfähigkeiten erzielt werden als mit bekannten Silbernanopartikelsolen ohne die entsprechende Dotierung.

Gegenstand der vorliegenden Erfindung ist demnach ein Metallnanopartikelsol mit einem Metallnanopartikelgehalt von ≥ 1 g/l enthaltend
- Silbernanopartikel
- wenigstens ein Dispergierhilfsmittel und
- wenigstens ein flüssiges Dispersionsmittel
dadurch gekennzeichnet, dass das Metallpartikelsol 0,1 bis 10 Gew.-% wenigstens eines Metalls ausgewählt aus der Gruppe Ruthenium, Rhodium, Palladium, Osmium, Iridium und Platin, bezogen auf den Silbergehalt des Metallnanopartikelsols, in Form des Metalls und/oder wenigstens einer Metallverbindung enthält.

Vorzugsweise liegt der Gehalt des Metalls ausgewählt aus der Gruppe Ruthenium, Rhodium, Palladium, Osmium, Iridium und Platin in Form des Metalls und/oder wenigstens einer Metallverbindung bei einer Menge von 0,1 bis 5 Gew.-%, besonders bevorzugt bei einer Menge von 0,4 bis 2 Gew.-%, bezogen auf den Silbergehalt des Metallnanopartikelsols.

Bevorzugt handelt es sich im Rahmen der Erfindung bei dem Metall ausgewählt aus der Gruppe Ruthenium, Rhodium, Palladium, Osmium, Iridium und Platin um Ruthenium. Das Ruthenium liegt in den erfindungsgemäßen Metallnanopartikelsolen bzw. vorzugsweise zu mindestens 90 Gew.-%, bevorzugt zu wenigstens 95 Gew.-%, besonders bevorzugt zu wenigstens 99 Gew.-%, ganz besonders bevorzugt vollständig in Form von Rutheniumdioxid vor.

In bevorzugsten Ausführungsformen weisen die Silbernanopartikel im Metallnanopartikelsol mindestens 80 %, bevorzugt mindestens 90 % des Gehalts an dem wenigstens einen Metall ausgewählt aus der Gruppe Ruthenium, Rhodium, Palladium, Osmium, Iridium und Platin auf. Das Metallnanopartikelsol enthält nur eine geringe Menge silberfreie Metallnanopartikel bzw. Metallverbindungsnanopartikel dieses Metalls ausgewählt aus der Gruppe Ruthenium, Rhodium, Palladium, Osmium, Iridium und Platin. Bevorzugt enthält das Metallnanopartikelsol weniger als 20 %, besonders bevorzugt weniger als 10 % - bezogen auf den Gehalt an diesem Metall - des Gehalts an diesem Metall ausgewählt aus der Gruppe Ruthenium, Rhodium, Palladium, Osmium, Iridium und Platin in Form silberfreier Metallnanopartikel bzw. Metallverbindungsnanopartikel dieses Metalls.

Das erfindungsgemäße Metallnanopartikelsol weist in der Regel bevorzugt einen Metallnanopartikelgehalt von von 1 g/l bis 25,0 g/l auf. Unter Einsatz von Aufkonzentrierungsschritten können jedoch auch Metallnanopartikelgehalte von bis zu 500,0 g/l oder noch höher erreicht werden.

Unter Metallnanopartikeln werden im Rahmen der Erfindung solche mit einem effektiven hydrodynamischen Durchmesser von weniger als 300 nm, bevorzugt mit einem effektiven hydrodynamischen Durchmesser von 0,1 bis 200 nm, besonders bevorzugt von 1 bis 150 nm, ganz besonders bevorzugt von 20 bis 140 nm gemessen mittels dynamischer Lichtstreuung zu verstehen. Für die Messung mittels dynamischer Lichtstreuung eignet sich beispielsweise ein ZetaPlus Zeta Potential Analyzer der Fa. Brookhaven Instrument Corporation.

Die Metallnanopartikel sind mit Hilfe wenigstens eines Dispergierhilfsmittels in wenigstens einem flüssigen Dispersionsmittel dispergiert.

Entsprechend zeichnen sich die erfindungsgemäßen Metallnanopartikelsole durch eine hohe kolloidchemische Stabilität aus, welche auch bei einer etwaigen Aufkonzentrierung erhalten bleibt. Der Begriff "kolloid-chemisch stabil" bedeutet hierbei, dass sich die Eigenschaften der kolloidalen Dispersion oder der Kolloide selbst während der üblichen Lagerzeiten vor der Anwendung nicht stark verändern, beispielsweise also keine wesentliche Aggregation oder Ausflockung der Kolloidteilchen stattfindet.

Als Dispergiermittel kommen bevorzugt polymere Dispergierhilfsmittel, bevorzugt solche mit einem Molekulargewicht (Gewichtsmittel) *M*_{w}, von 100 g/Mol bis 1000000 g/Mol, besonders bevorzugt von 1000 g/Mol bis 100000 g/Mol in Frage. Solche Dispergierhilfsmittel sind kommerziell erhältlich. Die Molekulargewichte (Gewichtsmittel) *M*_{w} können mittels Gel-Permeations-Chromatographie (GPC), vorzugsweise unter Verwendung von Polystyrol als Standard bestimmt werden.

Die Wahl des Dispergierhilfsmittels erlaubt es auch, die Oberflächeneigenschaften der Metallnanopartikel einzustellen. Auf der Partikeloberfläche haftendes Dispergierhilfsmittel kann beispielsweise den Partikeln eine positive oder negative Oberflächenladung verleihen.

In einer bevorzugten Ausführungsform der vorliegenden Erfindung ist das Dispergierhilfsmittel ausgewählt aus der Gruppe umfassend Alkoxylate, Alkylolamide, Ester, Aminoxide, Alkylpolyglukoside, Alkylphenole, Arylalkylphenole, wasserlösliche Homopolymere, statistische Copolymere, Blockcopolymere, Pfropfpolymere, Polyethylenoxide, Polyvinylalkohole, Copolymere aus Polyvinylalkoholen und Polyvinylacetaten, Polyvinylpyrrolidone, Cellulose, Stärke, Gelatine, Gelatinederivate, Aminosäurepolymere, Polylysin, Polyasparaginsäure, Polyacrylate, Polyethylensulfonate, Polystyrolsulfonate, Polymethacrylate, Kondensationsprodukte von aromatischen Sulfonsäuren mit Formaldehyd, Naphthalinsulfonate, Ligninsulfonate, Copolymerisate acrylischer Monomere, Polyethylenimine, Polyvinylamine, Polyallylamine, Poly(2-vinylpyridine) und/oder Polydiallyldimethylammoniumchlorid.

Solche Dispergierhilfsmittel können einerseits die Partikelgröße und die Partikelgrößenverteilung der Metallnanopartikelsole beeinflussen. Für einige Anwendungen ist es wichtig, dass eine enge Partikelgrößenverteilung vorliegt. Für andere Anwendungen ist es vorteilhaft, wenn eine breite oder multimodale Partikelgrößenverteilung vorliegt, da die Partikel eine dichtere Packung einnehmen können. Als weiterer Vorteil der genannten Dispergierhilfsmittel ist zu nennen, dass sie den Partikeln, auf deren Oberflächen sie haften, gezielte Eigenschaften verleihen können. Neben den bereits erwähnten positiven und negativen Oberflächenladungen, welche durch die gegenseitige Abstoßung mit zur kolloidalen Stabilität beitragen können, seien noch die Hydrophilie oder Hydrophobie der Oberfläche und die Biokompatibilität genannt. Hydrophilie und Hydrophobie der Nanopartikel sind beispielsweise wichtig, wenn die Partikel in einem bestimmten Medium dispergiert werden sollen, beispielsweise in Polymeren. Die Biokompatibilität der Oberflächen erlaubt den Einsatz der Nanopartikel in medizinischen Anwendungen.

Bei dem oder den flüssigen Dispersionsmittel(n) handelt es sich bevorzugt um Wasser oder Mischungen enthaltend Wasser und organische, vorzugsweise wasserlösliche organische Lösungsmittel. Jedoch sind auch andere Lösungsmittel denkbar, beispielsweise wenn das Verfahren bei Temperaturen unter 0°C oder oberhalb von 100°C durchgeführt werden soll oder das erhaltene Produkt in Matrices eingearbeitet werden soll, in denen die Anwesenheit von Wasser störend wäre. Beispielsweise lassen sich polar-protische Lösungsmittel wie Alkohole und Aceton, polar-aprotische Lösungsmittel wie *N,N*-Dimethylformamid (DMF) oder unpolare Lösungsmittel wie CH₂Cl₂ einsetzen. Vorzugsweise enthalten die Mischungen zu mindestens 50 Gew.-%, bevorzugt zu mindestens 60 Gew.-% Wasser, besonders bevorzugt zu mindestens 70 Gew.-% Wasser. Besonders bevorzugt handelt es sich bei dem oder den flüssigen Dispersionsmittel(n) um Wasser oder Mischungen aus Wasser mit Alkoholen, Aldehyden und/oder Ketonen, besonders bevorzugt um Wasser oder Mischungen aus Wasser mit ein- oder mehrwertigen Alkoholen mit bis zu vier Kohlenstoffatomen, wie z.B. Methanol, Ethanol, *n-*Propanol, iso-Propanol oder Ethylenglykol, Aldehyden mit bis zu vier Kohlenstoffatomen, wie z.B. Formaldehyd, und/oder Ketonen mit bis zu vier Kohlenstoffatomen, wie z.B. Aceton oder Methylethylketon. Ganz besonders bevorzugtes Dispersionsmittel ist Wasser.

Weiterhin Gegenstand der vorliegenden Erfindung ist ein Verfahren zur Herstellung der erfindungsgemäßen Metallnanopartikelsole.

Als besonders vorteilhaft hat sich dabei ein Verfahren erwiesen, bei dem zur Herstellung von nanoskaligen Metallpartikeln zunächst zumindest teilweise nanoskalige Metalloxid- und/oder Metallhydroxidpartikel hergestellt werden, welche in einem anschließenden Schritt reduziert werden. Dabei erfolgt im Rahmen der vorliegenden Erfindung jedoch lediglich eine Reduktion des Silberoxids und/oder Silberhydroxids und/oder Silberoxid-hydroxis zum elementaren Silber. Die Metalloxide der Metalle ausgewählt aus der Gruppe Ruthenium, Rhodium, Palladium, Osmium, Iridium und Platin werden nicht oder nicht vollständig, bevorzugt nicht zum elementaren Metall reduziert.

Gegenstand der vorliegenden Erfindung ist demnach ein Verfahren zur Herstellung eines erfindungsgemäßen Metallnanopartikelsols, dadurch gekennzeichnet, dass
a) eine Silbersalzlösung, eine Lösung enthaltend wenigstens ein Metallsalz eines Metalls ausgewählt aus der Gruppe Ruthenium, Rhodium, Palladium, Osmium, Iridium und Platin und eine Hydroxidionen enthaltende Lösung zusammengegeben werden,
b) anschließend die aus Schritt a) erhaltene Lösung mit einem Reduktionsmittel umgesetzt wird,
   wobei mindestens eine der Lösungen in Schritt a) wenigstens ein Dispergierhilfsmittel enthält, dadurch gekennzeichnet, dass die drei Lösungen in Schritt a) gleichzeitig zusammengegeben werden.

Überraschend wurde gefunden, dass mit den erhaltenen Metallnanopartikelsolen nur dann die Sinterzeit, die zur Erzielung einer ausreichenden Leitfähigkeit erforderlich ist, verringert werden kann, wenn die in Schritt a) die Silbersalzlösung, die Lösung enthaltend wenigstens ein Metallsalz eines Metalls ausgewählt aus der Gruppe Ruthenium, Rhodium, Palladium, Osmium, Iridium und Platin und die Hydroxidionen enthaltende Lösung gleichzeitig zusammen gegeben werden. Wird die Lösung enthaltend wenigstens ein Metallsalz eines Metalls ausgewählt aus der Gruppe Ruthenium, Rhodium, Palladium, Osmium, Iridium und Platin zur Silbersalzlösung gegeben, bevor die Hydroxidionen enthaltende Lösung zugegeben wird oder wird die zunächst die Silbersalzlösung mit der Hydroxidionen enthaltenden Lösung vermischt und erst anschließend die Lösung enthaltend wenigstens ein Metallsalz eines Metalls ausgewählt aus der Gruppe Ruthenium, Rhodium, Palladium, Osmium, Iridium und Platin zu dieser Lösung hinzugegeben, führt dies bei gleichen Sinterzeiten zu einer deutlich niedrigeren Leitfähigkeit als sie mit den Metallnanopartikelsolen erzielt werden kann, zu deren Herstellung die drei Lösungen gleichzeitig zusammen gegeben werden.

Das gleichzeitige Zusammengeben der drei Lösungen in Schritt a) kann erfindungsgemäß derart erfolgen, dass zwei der drei Lösungen zu der dritten Lösung hinzugegeben werden, wobei es unerheblich ist, welche der Lösungen vorgelegt wird. Das gleichzeitige Zusammengeben der drei Lösungen in Schritt a) kann erfindungsgemäß auch derart erfolgen, dass alle drei Lösungen zusammengeführt werden, ohne dass eine der drei Lösungen vorgelegt wird.

Gegenstand der vorliegenden Erfindung sind demnach insbesondere solche Metallnanopartikelsole, die gemäß dem erfindungsgemäßen Verfahren hergestellt wurden.

Ohne auf eine bestimmte Theorie festgelegt zu sein, wird angenommen, dass in dem Schritt a) des erfindungsgemäßen Verfahrens die in der Metallsalzlösung vorhandenen Metallkationen mit den Hydroxidionen der Hydroxidionen enthaltenden Lösung reagieren und hierbei als Metalloxide, Metallhydroxide, gemischte Metalloxid-Hydroxide und/oder deren Hydrate aus der Lösung ausfallen. Man kann dieses Verhalten als eine heterogene Fällung von nanoskaligen und submikroskaligen Partikeln bezeichnen.

In dem zweiten Schritt b) des erfindungsgemäßen Verfahrens wird die Lösung, welche die Metalloxid/-hydroxidpartikel enthält, mit einem Reduktionsmittel umgesetzt.

Im erfindungsgemäßen Verfahren wird die heterogene Fällung der nanoskaligen und submikroskaligen Partikel in Schritt a) in Gegenwart wenigstens eines Dispergierhilfsmittels, auch als Schutzkolloid bezeichnet, durchgeführt. Als derartige Dispergierhilfsmittel kommen bevorzugt die bereits vorangehend für die erfindungsgemäßen Metallpartikelsole genannten in Frage.

Bevorzugt wählt man in Schritt a) des erfindungsgemäßen Verfahrens ein molares Verhältnis zwischen der Stoffmenge an Hydroxidionen und der Stoffmenge an Metallkationen von ≥ 0,5:1 bis ≤ 10:1, bevorzugt ≥ 0,7:1 bis ≤ 5:1, besonders bevorzugt ≥ 0,9:1 bis ≤ 2:1.

Die Temperatur, bei der Verfahrensschritt a) durchgeführt wird, kann beispielsweise in einem Bereich von ≥: 0°C bis ≤ 100°C, bevorzugt ≥ 5°C bis ≤ 50°C, besonders bevorzugt ≥ 10°C bis ≤ 30°C liegen.

Bevorzugt wählt man beim Reduktionsschritt b) einen äquimolares Verhältnis oder einen Überschuss der Äquivalente des Reduktionsmittels im Verhältnis zu den zu reduzierenden Metallkationen von ≥ 1:1 bis ≤ 100:1, bevorzugt ≥ 2:1 bis ≤ 25:1, besonders bevorzugt ≥ 4:1 bis ≤ 5:1.

Die Temperatur, bei der Verfahrensschritt b) durchgeführt wird, kann beispielsweise in einem Bereich von ≥ 0°C bis ≤ 100°C, bevorzugt ≥ 30°C bis ≤ 95°C, besonders bevorzugt ≥ 55°C bis ≤ 90°C liegen.

Der nach Schritt a) erhaltenen Lösung können zur Einstellung eines gewünschten pH-Wertes Säuren oder Basen zugefügt werden. Vorteilhaft ist es beispielsweise, den pH-Wert im sauren Bereich zu halten. Hierdurch kann die Monodispersität der Partikelverteilung im nachfolgenden Schritt b) verbessert werden.

Bevorzugt liegt das Dispergierhilfsmittel in mindestens einer der drei einzusetzenden Lösungen (Eduktlösungen) für Schritt a) in einer Konzentration von ≥ 0,1 g/l bis ≤ 100 g/l, bevorzugt ≥ 1 g/l bis ≤ 60 g/l, besonders bevorzugt ≥ 1 g/l bis ≤ 40 g/l vor. Falls zwei oder alle drei einzusetzenden Lösungen in Schritt a) des erfindungsgemäßen Verfahrens das Dispergierhilfsmittel umfassen, ist es möglich, dass die Dispergierhilfsmittel verschiedene sind und in verschiedenen Konzentrationen vorliegen.

Durch die Auswahl eines solchen Konzentrationsbereiches ist einerseits sichergestellt, dass die Teilchen bei der Fällung aus der Lösung soweit mit Dispergierhilfsmittel bedeckt werden, dass die gewünschten Eigenschaften wie Stabilität und Redispergierbarkeit erhalten bleiben. Andererseits wird eine übermäßige Umhüllung der Teilchen mit dem Dispergierhilfsmittel vermieden. Ein unnötiger Überschuss an Dispergierhilfsmittel könnte außerdem in unerwünschter Weise mit dem Reduktionsmittel reagieren. Weiterhin kann eine zu große Menge Dispergierhilfsmittel nachteilig für die kolloidale Stabilität der Teilchen sein und die Weiterverarbeitung erschweren. Nicht zuletzt erlaubt es die Auswahl, Flüssigkeiten mit verfahrenstechnisch gut handhabbarer Viskosität zu verarbeiten und zu erhalten.

Bei der Silbersalzlösung handelt es sich bevorzugt um eine solche enthaltend Silberkationen und Anionen ausgewählt aus der Gruppe Nitrat, Perchlorat, Fulminate, Citrat, Acetat, Acetylacetonat, Tetrafluoroborat oder Tetraphenylborat. Besonders bevorzugt sind Silbernitrat, Silberacetat oder Silbercitrat. Ganz besonders bevorzugt ist Silbernitrat.

Bevorzugt liegen die Silberionen in der Silbersalzlösung in einer Konzentration von ≥ 0,001 Mol/l bis ≤ 2 Mol/l, besonders bevorzugt ≥ 0,01 Mol/l bis ≤ 1 Mol/l, ganz besonders bevorzugt ≥ 0,1 Mol/l bis ≤ 0,5 Mol/l vor. Dieser Konzentrationsbereich ist vorteilhaft, da bei geringeren Konzentrationen der erreichte Feststoffgehalt des Nanosols zu gering sein können und kostenträchtige Nachbehandlungsschritte nötig werden könnten. Bei höheren Konzentrationen besteht die Gefahr, dass die Fällung der Oxid/Hydroxidteilchen zu schnell ablaufen, was eine ungleichmäßige Partikelmorphologie zur Folge hätte. Zudem würden die Partikel durch die hohe Konzentration weiter aggregieren.

Bei der Lösung enthaltend wenigstens ein Metallsalz eines Metalls ausgewählt aus der Gruppe Ruthenium, Rhodium, Palladium, Osmium, Iridium und Platin handelt es sich bevorzugt um eine solche enthaltend ein Kation eines Metalls ausgewählt aus der Gruppe Ruthenium, Rhodium, Palladium, Osmium, Iridium und Platin und wenigstens eines der Gegenanionen zu den Metallkationen ausgewählt aus der Gruppe Nitrat, Chlorid, Bromid, Sulfat, Carbonat, Acetat, Acetylacetonat, Tetrafluoroborat, Tetraphenylborat oder Alkoxid-Anionen (Alkoholat-Anionen), wie z.B. Ethoxid. Besonders bevorzugt handelt es sich bei dem Metallsalz um wenigstens ein Rutheniumsalz, ganz besonders bevorzugt um ein solches ausgewählt aus Rutheniumchlorid, Rutheniumacetat, Rutheniumnitrat, Rutheniumethoxid oder Rutheniumacetylacetonat.

Bevorzugt liegen die Metallionen in der Metallsalzlösung in einer Konzentration von 0,01 g/l bis 1 g / 1 vor.

Bevorzugt ist die Hydroxidionen enthaltende Lösung erhältlich aus der Reaktion von Basen ausgewählt aus der Gruppe umfassend LiOH, NaOH, KOH, Mg(OH)₂, Ca(OH)₂, NH₄OH, aliphatische Amine, aromatische Amine, Alkalimetallamide und/oder Alkoxide. Besonders bevorzugte Basen sind NaOH und KOH. Solche Basen weisen den Vorteil auf, dass sie kostengünstig erhalten werden können und bei einer späteren Abwasserbehandlung der Lösungen aus dem erfindungsgemäßen Verfahren leicht zu entsorgen sind.

Die Konzentration der Hydroxidionen in der Hydroxidionen enthaltenen Lösung kann vorteilhafterweise und bevorzugt in einem Bereich von ≥ 0,001 Mol/l bis ≤ 2 Mol/l, besonders bevorzugt ≥ 0,01 Mol/l bis ≤ 1 Mol/l, ganz besonders bevorzugt ≥ 0,1 Mol/l bis ≤ 0,5 Mol/l liegen.

Bevorzugt ist das Reduktionsmittel ausgewählt aus der Gruppe umfassend Polyalkohole, Aminophenole, Aminoalkohole, Aldehyde, Zucker, Weinsäure, Zitronensäure, Ascorbinsäure sowie deren Salze, Thioharnstoffe, Hydroxyaceton, Eisenammoniumcitrat, Triethanolamin, Hydrochinon, Dithionite, wie z.B. Natriumdithionit, Hydroxymethansulfinsäure, Disulfite, wie z.B. Natriumdisulfit, Formamidinsulfinsäure, schweflige Säure, Hydrazin, Hydroxylamin, Ethylendiamin, Tetramethylethylendiamin, Hydroxylaminsulfat, Borhydride, wie z.B. Natriumborhydrid, Formaldehyd, Alkohole, wie z.B. Ethanol, *n-*Propanol, *iso*-Propanol, *n-*Butanol, *iso*-Butanol, *sec-*Butanol, Ethylenglykol, Ethylenglykoldiacetat, Glycerin und/oder Dimethylaminoethanol. Ein besonders bevorzugtes Reduktionsmittel ist Formaldehyd.

Gegebenenfalls können den Eduktlösungen, wobei hierunter auch die Lösung des Reduktionsmittels in Schritt b) verstanden wird, oder der nach Schritt a) erhaltenen Lösung noch weitere Substanzen wie niedermolekulare Additive, Salze, Fremdionen, Tenside und Komplexbildner zugesetzt werden. Weiterhin können die Eduktlösungen vor der Reaktion entgast werden, um beispielsweise Sauerstoff und CO₂ zu entfernen. Ebenfalls ist es möglich, dass die Eduktlösungen unter Schutzgas und/oder im Dunkeln gehandhabt werden.

Zur Entfernung von in der Produktdispersion, also in der Metallpartikeldispersion, gelösten Begleitstoffen und/oder Salzen und zur Aufkonzentrierung der Dispersion können die gängigen Verfahren der mechanischen Flüssigkeitsabtrennung (zum Beispiel Filtration am Druckfilter oder im Zentrifugalfeld, Sedimentation im Erdschwere- oder Zentrifugalfeld), der Extraktion, der Membrantechnik (Dialyse) und der Destillation eingesetzt werden.

Das erfindungsgemäße Verfahren kann als Batch-Verfahren oder als kontinuierliches Verfahren durchgeführt werden. Möglich ist auch eine Kombination aus beiden Verfahrensvarianten.

Es ist weiterhin möglich, dass die Produktdispersion mittels Standardverfahren (Ultrafiltration, Zentrifugation, Sedimentation - eventuell nach Zusatz von Flockungshilfsmitteln oder schlechtem Lösungsmittel - Dialyse und Eindampfen) aufkonzentriert und gegebenenfalls gewaschen werden.

Durch einen Waschschritt oder durch Zusatz von Additiven können gegebenenfalls die kolloidchemische Stabilität und die anwendungstechnischen Eigenschaften der Produktdispersion weiter optimiert werden.

In einer besonders bevorzugten Ausführungsform der vorliegenden Erfindung kann mindestens einer, besonders bevorzugt beide der Schritte a) und b) in einem Mikroreaktor durchgeführt. "Mikroreaktor" im Rahmen der vorliegenden Erfindung bezeichnet hierbei miniaturisierte, vorzugsweise kontinuierlich arbeitende Reaktoren, die unter anderem unter der Bezeichnung "Mikroreaktor", "Minireaktor", "Mikromischer" oder "Minimischer" bekannt sind. Beispiele sind T- und Y-Mischer sowie die Mikromischer verschiedenster Firmen (z. B. Ehrfeld Mikrotechnik BTS GmbH, Institut für Mikrotechnik Mainz GmbH, Siemens AG, CPC Cellular Process Chemistry Systems GmbH).

Mikroreaktoren sind deshalb von Vorteil, da bei der kontinuierlichen Produktion von Mikro- und Nanopartikeln über nasschemische und heterogene Fällungsverfahren ein Einsatz von Mischeinheiten erforderlich ist. Als Mischeinheiten können die oben erwähnten Mikroreaktoren sowie Dispergierdüsen beziehungsweise Düsenreaktoren eingesetzt werden. Beispiele für Düsenreaktoren sind der MicroJetReactor (Synthesechemie GmbH) und der Strahldispergator (Bayer Technology Services GmbH). Gegenüber Batchverfahren haben kontinuierlich arbeitende Verfahren den Vorteil, dass die Hochskalierung vom Labor- auf den Produktionsmaßstab durch das "numbering up"-Prinzip anstelle des "scaling up"-Prinzips vereinfacht wird.

Ein weiterer Vorteil des erfindungsgemäßen Verfahrens ist es, dass aufgrund der gut kontrollierbaren Produkteigenschaften eine Durchführung in einem Mikroreaktor möglich ist, ohne dass dieser im kontinuierlichen Betrieb verstopft.

Es ist bevorzugt, die Durchführung des heterogenen Fällungsverfahrens zur Herstellung der Metalloxid/Hydroxid-Partikel als Mikroverfahren in einem Kapillarsystem umfassend einen ersten Verweiler, einen zweiten Verweiler, einen Mikroreaktor, einen dritten Verweiler sowie ein Druckventil durchzuführen. Besonders bevorzugt werden dabei die Eduktlösungen, also die Silbersalzlösung, die Metallsalzlösung und die Hydroxidionen enthaltenden Lösung, über Pumpen oder Hochdruckpumpen wie zum Beispiel HPLC-Pumpen mit einer konstanten Flussrate durch die Anlage beziehungsweise das Kapillarsystem gepumpt. Über das Druckventil nach einem Kühler wird die Flüssigkeit entspannt und über eine Austrittskapillare in einem Produktbehälter gesammelt.

Der Mikroreaktor ist zweckmäßigerweise ein Mischer mit einer Mischzeit von ≥ 0,01 s bis ≤ 10 s, bevorzugt ≥ 0,05 s bis ≤ 5 s, besonders bevorzugt ≥ 0,1 s bis ≤ 0,5 s.

Als Verweiler sind Kapillaren geeignet mit einem Durchmesser von ≥ 0,05 mm bis ≤ 20 mm, bevorzugt ≥ 0,1 mm bis ≤ 10 mm, besonders bevorzugt ≥ 0,5 mm bis ≤ 5 mm.

Die Länge der Verweiler liegt zweckmäßigerweise zwischen ≥ 0,05 m bis ≤ 10 m, bevorzugt ≥ 0,08 m bis ≤ 5 m, besonders bevorzugt ≥ 0,1 m bis ≤ 0,5 m.

Die Temperatur der Reaktionsmischung im System liegt zweckmäßigerweise zwischen ≥ 0°C bis ≤ 100°C, bevorzugt ≥ 5°C bis ≤ 50°C, besonders bevorzugt ≥ 3°C bis ≤ 30°C.

Die Flussraten der Eduktströme pro Mikroreaktoreinheit liegen zweckmäßigerweise zwischen ≥ 0,05 ml/min bis ≤ 5000 ml/min, bevorzugt ≥ 0,1 ml/min bis ≤ 250 ml/min, besonders bevorzugt ≥ 1 ml/min bis ≤ 100 ml/min.

Die erfindungsgemäßen Metallpartikelsole sowie die nach dem erfindungsgemäßen Verfahren hergestellten Metallpartikelsole eignen sich aufgrund der gegenüber bekannten Silberpartikelsolen verringerten Sinterzeit zur Erzielung vergleichbarer Leitfähigkeiten insbesondere zur Herstellung von leitfähigen Drucktinten für die Herstellung leitfähiger Beschichtungen bzw. leitfähiger Strukturen sowie zur Herstellung solcher leitfähigen Beschichtungen bzw. leitfähigen Strukturen.

Gegenstand der vorliegenden Erfindung ist daher weiterhin die Verwendung der erfindungsgemäßen Metallpartikelsole zur Herstellung von leitfähigen Drucktinten, vorzugsweise solchen für Inkjet- und Siebdruckverfahren, leitfähigen Beschichtungen, vorzugsweise leitfähigen transparenten Beschichtungen, leitfähigen Mikrostrukturen und/oder funktionellen Schichten. Die erfindungsgemäßen Metallpartikelsole eignen sich weiterhin zur Herstellung von Katalysatoren, sonstigen Beschichtungsmaterialien, metallurgischen Erzeugnissen, elektronischen Erzeugnissen, Elektrokeramiken, optischen Materialien, Biolabeln, Materialien zur fälschungssicheren Markierung, Kunststoffkompositen, antimikrobiellen Materialien und/oder Wirkstoff-Formulierungen.

Die Erfindung wird nachfolgend anhand von Beispielen näher erläutert, ohne sie jedoch hierdurch darauf zu beschränken.

### Beispiele

### Beispiel 1 (erfindungsgemäß)

### a) Herstellung eines Ag₂O/RuO₂-Nanopartikelsols in einem Batchverfahren

Es wurden eine 54 millimolare Lösung von Silbernitrat (9,17 g/l AgNO₃) als Eduktlösung 1 und eine 54 millimolare Lösung von NaOH (2,14 g/l) mit einer Dispergierhilfsmittelkonzentration von 10 g/l als Eduktlösung 2 sowie eine 0,12 molare RuCl₃ Lösung in Ethanol als Eduktlösung 3 angesetzt. Als Lösemittel wurde demineralisiertes Wasser (aufbereitet mit Milli-Qplus, QPAK^{®} 2, Millipore Corporation) eingesetzt. Als Dispergierhilfsmittel wurde Disperbyk^{®} 190 (Byk GmbH) eingesetzt. In einem Glasbecher wurden bei Raumtemperatur 250 ml der Eduktlösung 1 vorgelegt. Unter fortwährendem Rühren wurden 250 ml der Eduktlösung 2 sowie 1 ml der Eduktlösung 3 über eine Dauer von 10 s gleichmäßig zu der Reaktionslösung zudosiert. Das äquivalente Verhältnis von Ruthenium zum Silber in der Eduktmischung betrug somit 9:1000 (0.9 Gew.-% Ruthenium bezogen auf den Gehalt an Silber). Der Ansatz wurde dann noch 10 min nachgerührt. Man erhielt ein grau-schwarz gefärbtes kolloid-chemisch stabiles Ag₂O/RuO₂-Nanopartikelsol.

### b) Reduktion mit Formaldehyd in einem Batchverfahren

500 ml des in Beispiel 1a hergestellten Ag₂O/RuO₂-Nanopartikels wurden unter fortwährendem Rühren bei Raumtemperatur mit 25 ml einer 2,33 molaren wässrigen Formaldehydlösung (70 g/l) versetzt, 30 min bei 60 °C gelagert und abgekühlt. Man erhielt ein kolloid-chemisch stabiles Sol mit metallischen, Rutheniumoxiddotierten Silbernanopartikeln. Anschließend wurden die Partikel mittels Zentrifugation (60 min bei 30000 U/min, Avanti J 30i, Rotor JA 30.50, Beckman Coulter GmbH) isoliert und durch Eintrag von Ultraschall (Branson Digital Sonifier) in demineralisiertem Wasser redispergiert. Es wurde ein kolloid-chemisch stabiles Metallpartikelsol mit einem Feststoffgehalt von 10 Gew.-% erhalten.

Die Untersuchung der Partikelgröße mittels dynamischer Lichtstreuung ergab kristalline Nanopartikel mit einem effektiven hydrodynamischen Durchmesser von 128 nm. Für die Messung mittels dynamischer Lichtstreuung wurde ein ZetaPlus Zeta Potential Analyzer der Fa. Brookhaven Instrument Corporation verwendet.

Von dieser Dispersion wurde eine 2 mm breite Linie auf eine Polycarbonat-Folie (Bayer MaterialScience AG, Makrolon^{®} DE1-1) aufgetragen und für zehn Minuten in einem Ofen bei 140°C und Umgebungsdruck (1013 hPa) getrocknet und gesintert

Die Leitfähigkeit betrug nach 10 min 3000 S/m, nach 60 min 4,4 *10⁶ S/m.

### a) Herstellung eines Ag₂O/RuO₂-Nanopartikelsols in einem Batchverfahren

Es wurden eine 54 millimolare Lösung von Silbernitrat (9,17 g/l AgNO₃) als Eduktlösung 1 und eine 54 millimolare Lösung von NaOH (2,14 g/l) mit einer Dispergierhilfsmittelkonzentration von 10 g/l als Eduktlösung 2 sowie eine 0,12 molare RuCl₃ Lösung als Eduktlösung 3 angesetzt. Als Lösemittel wurde demineralisiertes Wasser (aufbereitet mit Milli-Qplus, QPAK^{®} 2, Millipore Corporation) eingesetzt. Als Dispergierhilfsmittel wurde Disperbyk^{®} 190 eingesetzt. In einem Glasbecher wurden bei Raumtemperatur 250 ml der Eduktlösung 1 vorgelegt. Unter fortwährendem Rühren wurden 250 ml der Eduktlösung 2 sowie 2,0 ml der Eduktlösung 3 über eine Dauer von 10 s gleichmäßig zu der Reaktionslösung zudosiert. Das äquivalente Verhältnis von Ruthenium zum Silber in der Eduktmischung betrug somit 18:1000 (1.8 Gew.-% Ruthenium bezogen auf den Gehalt an Silber). Der Ansatz wurde dann noch 10 min nachgerührt. Man erhielt ein grau-schwarz gefärbtes kolloid-chemisch stabiles Ag₂O/RuO₂-Nanopartikelsol.

### b) Reduktion mit Formaldehyd in einem Batchverfahren

500 ml des in Beispiel 2a) hergestellten Ag₂O/RuO₂-Nanopartikelsols wurden unter fortwährendem Rühren bei Raumtemperatur mit 25 ml einer 2,33 molaren wässrigen Formaldehydlösung (70 g/l) versetzt, 30 min bei 60 °C gelagert und abgekühlt. Man erhielt ein kolloid-chemisch stabiles Sol mit metallischen, Rutheniumoxiddotierten Silbernanopartikeln. Anschließend wurden die Partikel mittels Zentrifugation (60 min bei 30000 U/min, Avanti J 30i, Rotor JA 30.50, Beckman Coulter GmbH) isoliert und durch Eintrag von Ultraschall (Branson Digital Sonifier) in demineralisiertem Wasser redispergiert. Es wurde ein kolloid-chemisch stabiles Metallpartikelsol mit einem Feststoffgehalt von 10 Gew.-% erhalten.

Aus dieser Dispersion wurde auf die gleiche Weise wie in Beispiel 1b) beschrieben, eine Oberflächenbeschichtung auf eine Polycarbonat-Folie aufgebracht. Die analog zu Beispiel 1b) bestimmte Leitfähigkeit betrug nach 60 min 4,4 *10⁶ S/m.

### Vergleichsbeispiel 3: Rutheniumfreies Silbernanosol

Zum Vergleich wurde eine Dispersion mit sterisch stabilisierten Silbernanopartikeln hergestellt. Hierzu wurden eine 0,054 molare Silbernitratlösung mit einer Mischung aus einer 0,054 molaren Natronlauge und dem Dispergierhilfsmittel Disperbyk^{®} 190 (1 g/l) in einem Volumenverhältnis von 1:1 versetzt und 10 min gerührt. Zu dieser Reaktionsmischung wurde unter Rühren eine wässrige 4,6 molare wässrige Formaldehyd-Lösung zugesetzt, so dass das Verhältnis Ag⁺ zu Reduktionsmittel 1:10 beträgt. Diese Mischung wurde auf 60°C erwärmt, 30 min bei dieser Temperatur gehalten und anschließend abgekühlt. Die Partikel wurden in einem ersten Schritt mittels Diafiltration von den nicht umgesetzten Edukten getrennt und anschließend wurde das Sol aufkonzentiert. Dazu wurde eine Membran mit 30000 Dalton verwendet. Es entstand ein kolloidstabiles Sol mit einem Feststoffgehalt von bis zu 20 Gew.-% (Silberpartikel und Dispergierhilfsmittel). Der Anteil an Disperbyk^{®} 190 betrug laut Elementaranalyse nach der Membranfiltration 6 Gew.-% bezogen auf den Silbergehalt. Aus dieser Dispersion wurde auf die gleiche Weise wie in Beispiel 1b) beschrieben, eine Oberflächenbeschichtung auf eine Polycarbonat-Folie aufgebracht. Die analog zu Beispiel 1b) bestimmte spezifische Leitfähigkeit konnte erst nach einer Stunde Trocknungs- und Sinterzeit bei 140°C und Umgebungsdruck (1013 hPa) bestimmt werden. Die spezifische Leitfähigkeit betrug nach dieser Stunde Trocknungs- und Sinterzeit etwa 1 S/m.

### Vergleichsbeispiel 4: Nicht-erfindungsgemäßes Ruthenium-dotiertes Silbernanosol

### a) Herstellung eines Ag₂O/RuO₂-Nanopartikelsols in einem Batchverfahren

Es wurden eine 54 millimolare Lösung von Silbernitrat (9,17 g/l AgNO₃) als Eduktlösung 1 und eine 54 millimolare Lösung von NaOH (2,14 g/l) mit einer Dispergierhilfsmittelkonzentration von 10 g/l als Eduktlösung 2 sowie eine 0,12 molare RuCl₃ Lösung als Eduktlösung 3 angesetzt. Als Lösemittel wurde demineralisiertes Wasser (aufbereitet mit Milli-Qplus, QPAK^{®} 2, Millipore Corporation) eingesetzt. Als Dispergierhilfsmittel wurde Disperbyk^{®} 190 eingesetzt. In einem Glasbecher wurden bei Raumtemperatur 250 ml der Eduktlösung 1 vorgelegt. Unter fortwährendem Rühren wurden 250 ml der Eduktlösung 2 sowie 0,1 ml der Eduktlösung 3 über eine Dauer von 10 s gleichmäßig zu der Reaktionslösung zudosiert. Das äquivalente Massenverhältnis von Ruthenium zum Silber in der Eduktmischung betrug somit 9:10000 (0.09 Gew.-% Ruthenium bezogen auf den Gehalt an Silber). Der Ansatz wurde dann noch 10 min nachgerührt. Man erhielt ein grau-schwarz gefärbtes kolloid-chemisch stabiles Ag₂O/RuO₂-Nanopartikelsol.

### b) Reduktion mit Formaldehyd in einem Batchverfahren

500 ml des in Vergleichsbeispiel 4a) hergestellten Ag₂O/RuO₂-Nanopartikels wurden unter fortwährendem Rühren bei Raumtemperatur mit 25 ml einer 2,33 molaren wässrigen Formaldehydlösung (70 g/l) versetzt, 30 min bei 60 °C gelagert und abgekühlt. Man erhielt ein kolloid-chemisch stabiles Sol mit metallischen, Rutheniumoxiddotierten Silbernanopartikeln. Anschließend wurden die Partikel mittels Zentrifugation (60 min bei 30000 U/min, Avanti J 30i, Rotor JA 30.50, Beckman Coulter GmbH) isoliert und durch Eintrag von Ultraschall (Branson Digital Sonifier) in demineralisiertem Wasser redispergiert. Es wurde ein kolloid-chemisch stabiles Metallpartikelsol mit einem Feststoffgehalt von 10 Gew.-% erhalten.

Aus dieser Dispersion wurde auf die gleiche Weise wie in Beispiel 1b) beschrieben, eine Oberflächenbeschichtung auf eine Polycarbonat-Folie aufgebracht. Analog zu Beispiel 1b) konnte auch nach einer Stunde Trocknungs- und Sinterzeit bei 140°C und Umgebungsdruck (1013 hPa) keine spezifische Leitfähigkeit nachgewiesen werden.

## Patentansprüche

1. Metallnanopartikelsol mit einem Metallpartikelgehalt von ≥ 1 g/l enthaltend
- Silbernanopartikel
- wenigstens ein Dispergierhilfsmittel und
- wenigstens ein flüssiges Dispersionsmittel
**dadurch gekennzeichnet, dass** das Metallnanopartikelsol 0,1 bis 10 Gew.-% wenigstens eines Metalls ausgewählt aus der Gruppe Ruthenium, Rhodium, Palladium, Osmium, Iridium und Platin, bezogen auf den Silbergehalt des Metallnanopartikelsols, in Form des Metalls oder wenigstens einer Metallverbindung enthält.

2. Metallnanopartikelsol gemäß Anspruch 1, **dadurch gekennzeichnet, dass** es sich bei dem Metall ausgewählt aus der Gruppe Ruthenium, Rhodium, Palladium, Osmium, Iridium und Platin um Ruthenium handelt.

3. Metallnanopartikelsol gemäß Anspruch 1 oder 2, **dadurch gekennzeichnet, dass** das Ruthenium zu mindestens 90 Gew.-%, bevorzugt zu wenigstens 95 Gew.-%, besonders bevorzugt zu wenigstens 99 Gew.-% in Form von Rutheniumdioxid vorliegt.

4. Metallnanopartikelsol gemäß wenigstens einem der Ansprüche 1 bis 3, **dadurch gekennzeichnet, dass** es sich bei dem flüssigen Dispersionsmittel um Wasser oder eine Mischung enthaltend zu mindestens 50 Gew.-%, bevorzugt zu mindestens 60 Gew.-% Wasser handelt.

5. Metallnanopartikelsol gemäß wenigstens einem der Ansprüche 1 bis 4, **dadurch gekennzeichnet, dass** es sich bei dem Dispergierhilfsmittel um ein polymeres Dispergierhilfsmittel, bevorzugt um ein solches mit einem Gewichtsmittel *M*_{w}, von 100 g/Mol bis 1000000 g/Mol, besonders bevorzugt von 1000 g/Mol bis 100000 g/Mol handelt.

6. Metallnanopartikelsol gemäß wenigstens einem der Ansprüche 1 bis 5, **dadurch gekennzeichnet, dass** es sich bei dem Dispergierhilfsmittel um wenigstens ein solches handelt ausgewählt aus der Gruppe umfassend Alkoxylate, Alkylolamide, Ester, Aminoxide, Alkylpolyglukoside, Alkylphenole, Arylalkylphenole, wasserlösliche Homopolymere, statistische Copolymere, Blockcopolymere, Pfropfpolymere, Polyethylenoxide, Polyvinylalkohole, Copolymere aus Polyvinylalkoholen und Polyvinylacetaten, Polyvinylpyrrolidone, Cellulose, Stärke, Gelatine, Gelatinederivate, Aminosäurepolymere, Polylysin, Polyasparaginsäure, Polyacrylate, Polyethylensulfonate, Polystyrolsulfonate, Polymethacrylate, Kondensationsprodukte von aromatischen Sulfonsäuren mit Formaldehyd, Naphthalinsulfonate, Ligninsulfonate, Copolymerisate acrylischer Monomere, Polyethylenimine, Polyvinylamine, Polyallylamine, Poly(2-vinylpyridine) und/oder Polydiallyldimethylammoniumchlorid.

7. Metallnanopartikelsol gemäß wenigstens einem der Ansprüche 1 bis 6, **dadurch gekennzeichnet, dass** das Metallnanopartikelsol 0,1 bis 5 Gew.-%, bevorzugt 0,4 bis 2 Gew.-% wenigstens eines Metalls ausgewählt aus der Gruppe Ruthenium, Rhodium, Palladium, Osmium, Iridium und Platin, bezogen auf den Silbergehalt, in Form des Metalls oder wenigstens einer Metallverbindung enthält.

8. Verfahren zur Herstellung eines Metallnanopartikelsols gemäß wenigstens einem der Ansprüche 1 bis 7, **dadurch gekennzeichnet, dass**
a) eine Silbersalzlösung, eine Lösung enthaltend wenigstens ein Metallsalz eines Metalls ausgewählt aus der Gruppe Ruthenium, Rhodium, Palladium, Osmium, Iridium und Platin und eine Hydroxidionen enthaltende Lösung zusammengegeben werden,
b) anschließend die aus Schritt a) erhaltene Lösung mit einem Reduktionsmittel umgesetzt wird,
wobei mindestens eine der Lösungen in Schritt a) wenigstens ein Dispergierhilfsmittel enthält, **dadurch gekennzeichnet, dass** die drei Lösungen in Schritt a) gleichzeitig zusammengegeben werden.

9. Verfahren gemäß Anspruch 8, **dadurch gekennzeichnet, dass** es sich bei der Silbersalzlösung um eine solche enthaltend Silberkationen und Anionen ausgewählt aus der Gruppe Nitrat, Perchlorat, Fulminate, Citrat, Acetat, Acetylacetonat, Tetrafluoroborat oder Tetraphenylborat handelt.

10. Verfahren gemäß Anspruch 8 oder 9, **dadurch gekennzeichnet, dass** die Hydroxidionen enthaltende Lösung erhältlich ist aus der Reaktion von Basen ausgewählt aus der Gruppe umfassend LiOH, NaOH, KOH, Mg(OH)₂, Ca(OH)₂, NH₄OH, aliphatische Amine, aromatische Amine, Alkalimetallamide und/oder Alkoxide.

11. Verfahren gemäß wenigstens einem der Ansprüche 8 bis 10, **dadurch gekennzeichnet, dass** das Reduktionsmittel ausgewählt ist aus der Gruppe umfassend Polyalkohole, Aminophenole, Aminoalkohole, Aldehyde, Zucker, Weinsäure, Zitronensäure, Ascorbinsäure sowie deren Salze, Triethanolamin, Hydrochinon, Natriumdithionit, Hydroxymethansulfinsäure, Natriumdisulfit, Formamidinsulfmsäure, schweflige Säure, Hydrazin, Hydroxylamin, Ethylendiamin, Tetramethylethylendiamin, Hydroxylaminsulfat, Natriumborhydrid, Formaldehyd, Alkohole, Ethanol, *n*-Propanol, *iso*-Propanol, *n*-Butanol, *iso*-Butanol, *sec-*Butanol, Ethylenglykol, Ethylenglykoldiacetat, Glycerin und/oder Dimethylaminoethanol.

12. Verfahren gemäß wenigstens einem der Ansprüche 8 bis 11, **dadurch gekennzeichnet, dass** es sich bei dem Metallsalz eines Metalls ausgewählt aus der Gruppe Ruthenium, Rhodium, Palladium, Osmium, Iridium und Platin um wenigstens ein Rutheniumsalz ausgewählt aus Rutheniumchlorid, Rutheniumacetat, Rutheniumnitrat, Rutheniumethoxid, Rutheniumacetylacetonat handelt.

13. Verwendung eines Metallnanopartikelsols gemäß wenigstens einem der Ansprüche 1 bis 7 zur Herstellung von leitfähigen Drucktinten.

14. Verwendung eines Metallnanopartikelsols gemäß wenigstens einem der Ansprüche 1 bis 7 zur Herstellung von leitfähigen Beschichtungen oder leitfähigen Strukturen..
